# EUROPEAN PATENT SPECIFICATION

(11) **EP 0 742 752 B1**
(45) Date of publication and mention of the grant of the patent: **19.04.2000**
(21) Application number: 95907918.7
(22) Date of filing: 20.01.1995
(51) Int. Cl.: B29C 45/17, B65D 1/40

(54) **METHOD OF PRODUCING A MOULDED ARTICLE HAVING A HOLLOW RIM**
VERFAHREN ZUM HERSTELLEN EINES FORMKÖRPERS MIT EINEM HOHLEN BORDEL
PROCEDE DE PRODUCTION D'UN ARTICLE MOULE A BORD CREUX

(30) Priority: 28.01.1994 SE 9400267
(43) Date of publication of application: 20.11.1996
(73) Proprietor: PERSTORP AB, 284 80 Perstorp (SE)
(72) Inventor: BRAUNER, Manfred, A-1130 Wien (AT)
(74) Representative: Füchsle, Klaus, Dipl.-Ing.
(86) International application number: PCT/SE95/00052
(87) International publication number: WO 95/20477

(56) References cited:
- EP-A- 0 472 788
- EP-A- 0 498 444
- WO-A-90/00466
- DE-A- 3 940 186
- DE-A- 4 034 663
- DE-A- 4 128 883
- US-A- 5 252 287
- US-A- 5 262 105

## Description

The present invention relates to an improved method of producing an injection moulded article having a hollow blown rim being an integrated part of the article. The article is preferably manufactured in one piece and the rim is produced using a gas injection procedure. The article is preferably a transport and/or a storage container, a bottle crate, a waste container, a pallet or a pallet container and is made of a polymeric material as for instance a thermoplastic material such as polyethylene and polypropylene. In a further aspect the invention refers to an article produced by using said improved method.

Injection moulded containers, crates, pallets and the like have most often one or more upper and/or outer rims, whereby the rim provides strength and stability as well as it works as stacking and/or gripping mean. A commonly used concept for a rim consists of at least one U-shaped and downward open profile being circumambient or located on at least two opposite sides of a container etc. In order to obtain a satisfactory strength, rims of such a type require reinforcing and other structural means, such as ribs, girders, webs, edgings, rippings and the like, which means are placed inside the rim and/or connecting the rim with a side wall of a container, a loading area of a pallet etc. A manufacturing of injection moulded articles having such a rim concept, furthermore incur a complex build-up of the moulding impressions included in used moulding tool, an excessive material usage and an increased cycle time resulting in an unnecessary high product weight and unnecessary high costs. Open rims also causes and effects accumulation of various contamination, which is a major problem especially in food processing and food transporting.

There is a certain and increasing need for containers, crates, pallets etc. having a rim providing a high degree of strength, a low weight and a facilitated build-up, excluding reinforcing means as above and giving an article of a substantially uniform surface quality, of the moulding tool as well as of the article per se. Hollow blown profiles, produced by using a gas injection procedure, can to a certain extent overcome or reduce discussed problems. Hollow profiles can be produced using a number of well known and in detail disclosed gas injection procedures. Some of the most important and commonly used procedures and companies of origin include
AIRMOLD - Battenfeld
AIRPRESS - Klöckner Ferromatik
CINPRES (Controlled Internal Pressure Moulding) - Pearless Cinpress
ENCORE (Engineered Nitrogen Coresystem) - Encore Systems
GAIN (Gas-assisted Injection Molding) - Detroid Plastic Molding
GASMELT - Engel
GID (Gasinnendruckverfahren) - Dynamit-Nobel
GIP (Gasinnendruckprozeß)- Demag
GIT (Gasinjektiontechnik) - Schade

Common features of gas injection procedures are that a mould impression of a moulding tool is filled with a molten polymeric material followed by injection of a pressurised gas. The molten polymeric material is thereby displaced with the gas by discharge of excess material or expansion of the mould impression resulting in a hollow substantially closed moulded article or a part of such an article. The pressurised gas is normally injected into the core of the molten polymeric material.

This is known from DE 39 40 186 where a hollow part is made by letting the thermoplastic material solidify somewhat before a pressurised gas is injected into the still molten material in the centre of the cavity. The solidified skin is then punctured so that an access of molten material can be extracted from the mould.

It is also known from DE 40 34 663 to mould a hollow part by injecting a high-pressure gas into the thermoplastic material during the post-pressure phase of the moulding, while at the same time enlarging the cavity by moving one wall in the mould.

Gas injection procedures are in conjunction with injection moulding of containers, crates, pallets and the like, used for the manufacture of i.a. pallet skids, various gripping and reinforcing means, partial rims etc. Circumambient hollow blown rims of a function similar to the circumambient U-shaped rims, have due to limitations in the adaptation of gas injection procedures not been possible to satisfactorily produce. The limitations constituting a number of problems and drawbacks mainly refer to the discharge of excess of molten polymeric material and/or the expansion of the mould cavity. The migration of the gas through the volume of the mould impression will with increasing dimensions of the moulded article be increasingly obstructed. Such obstructions may or will result in inferior quality, such as undercut, uneven material thickness and/or contorted parts. If the increased obstructions are compensated for by an increased gas pressure, the risk for ruptures or blow outs of the material is obvious and very high. In the international patent application WO 90/00466 is a method allowing articles of relatively larger dimensions to be produced using a gas injection procedure. The method comprises a moulding tool provided with a spill cavity. A charge of pressurised gas is injected into the mould impression to displace a portion of the molten material. Displaced material flows through a passage into a connected spill cavity or reservoir alternatively serving as an appendage of the article, a separate article or a cavity to receive spilled material for regrinding. Such cavities necessitate a certain amount of subsequent treatment, such as removal of separate articles, spill material and strings, bars and the like connecting the finished moulded article with the material or article in a spill cavity.

The present invention provides a method of producing an injection moulded article having a circumambient substantially closed hollow rim. The rim is produced using a gas injection procedure. The provides a rim giving adequate strength without reinforcing means as well as a substantially uniform surface structure. Problems and drawbacks, as disclosed above, due to obstructions related to the gas injection and caused by the relatively large volume and length of a circumambient rim are overcome without using spill cavities resulting in appendages, separate articles etc. and pendant subsequent treatment.

The method of the present invention is defined in claim 1. It particularly involves a moulding tool having one or more moulding impressions producing at least one circumambient rim. The rim has a substantially closed circumambient hollow internal channel. The moulding impression is provided with
- at least one gate for injection of a molten polymeric material,
- at least one gas duct for gas injection into the core of the molten polymeric material thus giving an internal gas pressure resulting in a hollow channel,
- at least one gate for discharge of excess of molten polymeric material and at least one moving part for controlled expansion of the moulding impression to a pre-determined volume and
- at least one cavity having a pre-determined volume and being coupled to and/or surrounding a gas duct.

The cavity constitutes a material reservoir for levelling of the pressure inside the channel resulting from the gas injection, whereby the discharge of the excess of molten polymeric material and/or the expansion of the moulding impression is levelled. The cavity produces an abscess in rim. Such an abscess further increases the strength and can be designed to work as a stacking, piling or guiding mean, a stopper, a gripper, a lid attachment and the like. The fact that the abscess in an integrated part of the rim makes a subsequent treatment as discussed above unnecessary.

In various embodiments of the present invention can the volume of a cavity coupled to and/or surrounding a gas duct be adjusted by the gas pressure and/or by a regulating device. The moving part for controlled expansion of the moulding impression is also and suitably controlled by the gas pressure and/or by a regulating device.

The moulding impression is in a further embodiment provided with at least one cavity coupled to or surrounding a gate for discharge of excess of molten polymeric material. Such a cavity is similar to a cavity coupled to and/or surrounding a gas duct. The volume of the cavity can preferably be adjusted by the gas pressure and/or by a regulating device.

In case a gas duct and/or a gate for injection or discharge of the molten polymeric material give rise to apertures or other openings in the circumambient rim, these are suitably sealed by applying a molten polymeric material or by means of loosely attached, glued or ultrasonically welded plugs, plates and/or the like. Plugs, plates etc. are suitably made of the same material as the article per se or of a material compatible therewith.

In a further aspect the present invention refers to a moulded article produced by using above disclosed method. The article is preferably selected from the group consisting of transport and/or storage containers, bottle crates, waste containers, pallets, pallet containers or similar storage and/or transport appliances.

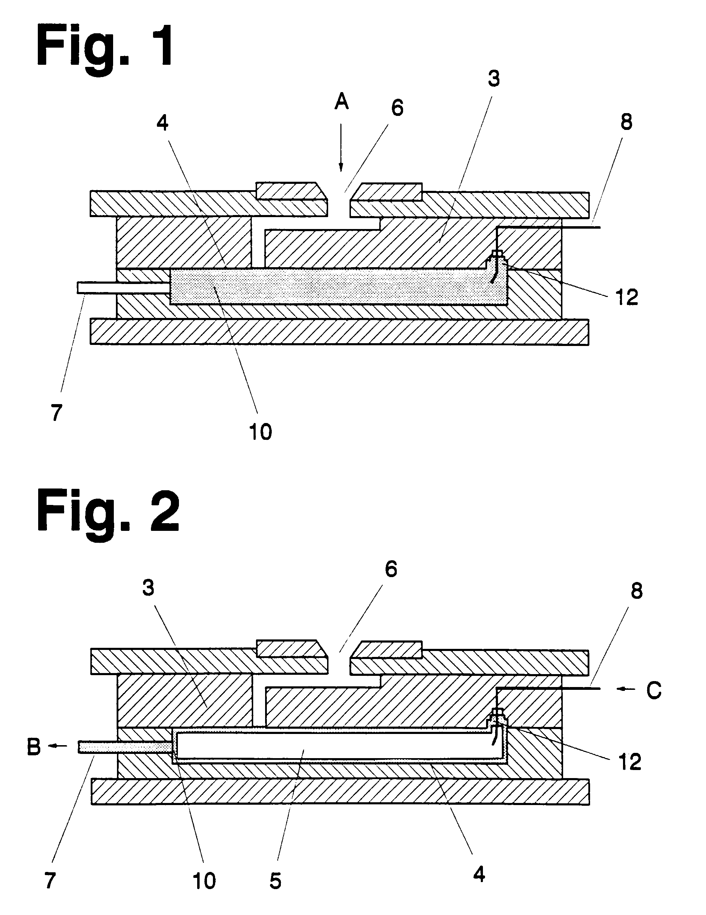

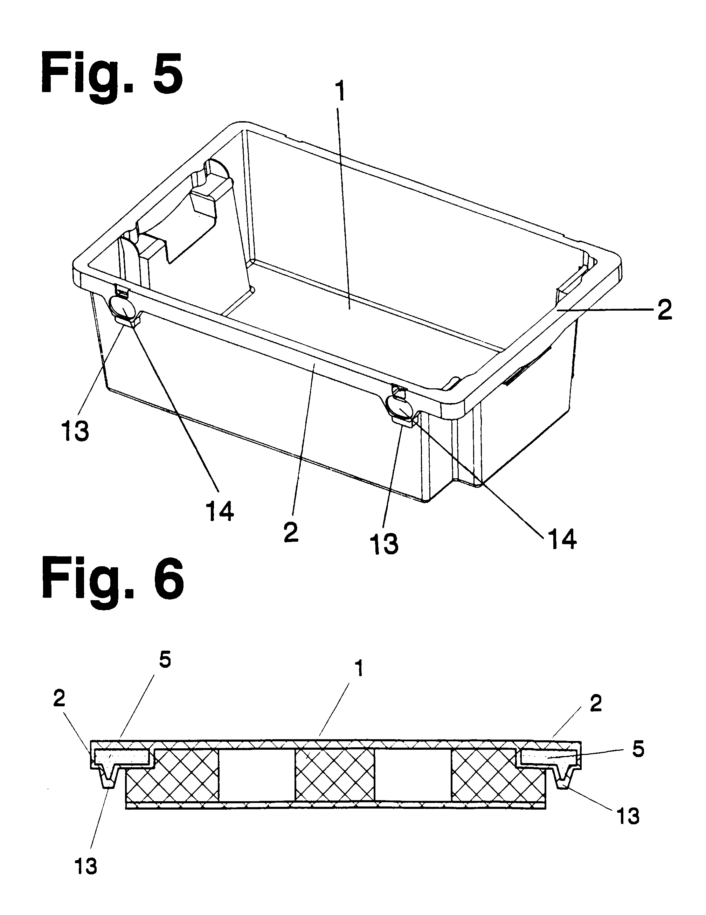

These and other objects and the present invention will be more fully understood from the following detailed description, taken in conjunction with appended drawings, wherein like reference numerals have been applied to like parts throughout the various Figures and wherein Figures 1 - 4 are schematical cross-sections of moulding impressions 4 equipped for a gas injection procedure. A moulding impression 4 is a part of a moulding tool 3 used in various embodiments of the present invention and is shown before and after gas injection. Figure 5 is an injection moulded article 1 having a circumambient rim 2 being an integrated part of the article 1. The article 1 is a transport and storage container. Figure 6 is a planar cross-section of an injection moulded article 1 being a pallet. The pallet is provided with a circumambient rim 2 similar to that in Figure 5. The container of Fig. 5 the pallet of Fig. 6 are both produced using embodiments of the method according to the present invention.

Figures 1 and 2 show schematically cross-sections of a part of a moulding tool 3 comprising a moulding impression 4 having a gate 7 for discharge of excess of polymeric material 10, which moulding impression 4 produces a substantially closed hollow circumambient rim 2 (see Fig. 5 and 6). Only a part of said rim 2 is for reason of simplicity shown and from a long side. The moulding impression 4 includes a gate 6 for injection of molten polymeric material 10, a duct 8 for injection of gas into the core of the molten polymeric material 10, a cavity 12 coupled to and surrounding the duct 8 and said gate 7 for discharge of excess of molten polymeric material 10. Figure 1 shows the moulding impression 4 after filling of molten polymeric material 10 but before gas injection through the duct 8. Figure 2 shows the same moulding impression as Figure 1 but after the gas injection through the duct 8, whereby excess of molten polymeric material is discharged through the gate 7 and a hollow channel 5 is formed within the molten polymeric material 10 and thus within the rim 2 (see Fig. 5 and 6). The cavity 12 works as a material reservoir levelling the discharge of the molten polymeric material 10. Molten polymeric material 10 is injected through the gate 6 as indicated by arrow A and discharged through gate 7 as indicated by arrow B. Gas is injected through the duct 8 as indicated by arrow C.

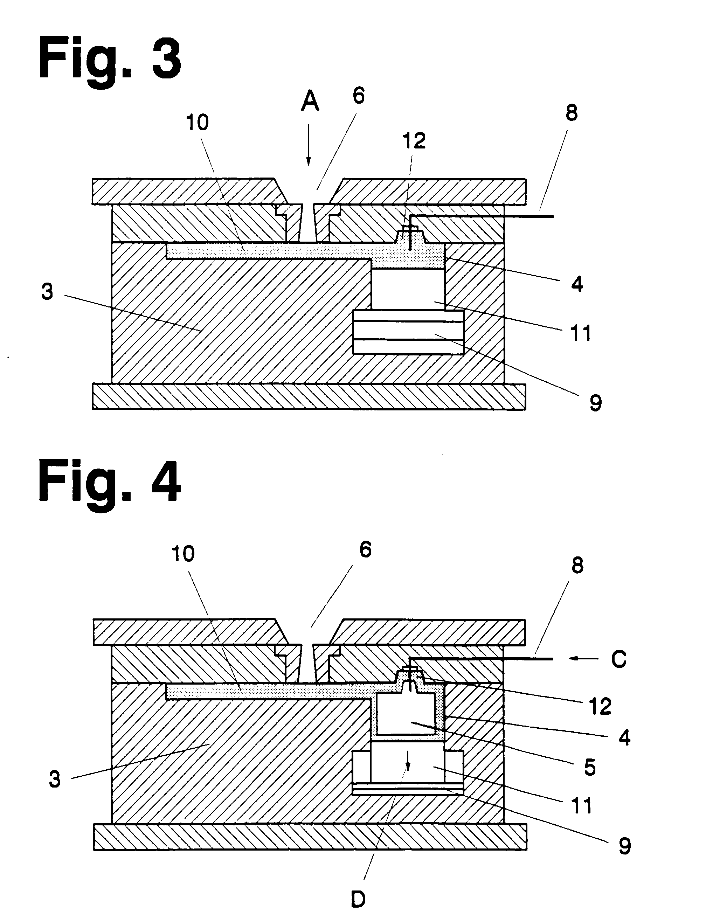

Figures 3 and 4 show schematically cross-sections of a part of a moulding tool 3 comprising a moulding impression 4, having a moving part 11 for controlled expansion of the moulding impression 4, said moulding impression 4 producing a substantially closed hollow circumambient rim 2 (see Fig. 5 and 6). Only a part of said rim 2 is for reason of simplicity shown and from a short side. The moulding impression 4 includes a gate 6 for injection of molten polymeric material 10, a duct 8 for injection of gas into the core of the molten polymeric material 10, a cavity 12 coupled to and surrounding the duct 8 and said moving part 11 which is provided with a regulating device 9.

Figure 3 shows the moulding impression 4 after filling of molten polymeric material 10 but before gas injection through the duct 8. Figure 4 shows the same moulding impression as Figure 3 but after gas injection through the duct 8, whereby the moulding impression 4 is expanded when the moving part 11 moves as indicated by arrow D and a hollow channel 5 is formed within the molten polymeric material 10 and thus within the rim 2 (see Fig. 5 and 6). The cavity 12 works as a material reservoir levelling the expansion of the moulding impression 4. Molten polymeric material 10 is injected through the gate 6 as indicated by arrow A and gas is injected through the duct 8 as indicated by arrow C. The moving part is controlled, giving desired expansion of the moulding cavity, by the regulating device 9.

Figure 5 shows in a perspective view seen from above an injection moulded article 1 being an transport and storage container having a substantially closed hollow circumambient upper rim 2. The article is produced using the method according to the present invention and said hollow rim 2 is an integrated part of the article 1. The rim 2 has abscesses 13 resulting from cavities 12 (see Fig. 1-4) in the moulding impression 4 (see Fig. 1-4). Apertures in the abscess 13 resulting from a gas duct 8 (see Fig. 1-4) are sealed by ultrasonically welded plates 14. The abscesses 13 and hence cavities 12 and gas ducts 8 (see Fig. 1-4) are placed in pairs on the long sides of the rim 2 and of the moulding impression 4 (see Fig. 1-4), respectively.

Figure 6 shows from a long side a planar view a cross-section of an injection moulded article 1 being an pallet having a substantially closed hollow circumambient upper rim 2. The pallet is produced using the method according to the present invention and said hollow rim 2 is an integrated part thereof. The rim 2 has a hollow circumambient channel 5 and has, furthermore, abscesses 13 resulting from cavities 12 (see Fig. 1-4) in the moulding impression 4 of used moulding tool 3 (see Fig. 1-4).

## Claims

1. A method of producing an injection moulded article (1), such as a storage, a transport or a waste container, a pallet, a pallet container or the like made of a polymeric material, and having a hollow rim (2) being an integrated part of said article (1), whereby the rim (2) is produced using a gas injection procedure involving a moulding tool (3) having one or more moulding impressions (4) of which at least one produces a rim (2) or part of a rim (2) having at least one hollow channel (5), the moulding impression (4) being provided with at least one gate (6) for injection of a molten polymeric material (10), at least one gas duct (8) for gas injection into the core of the molten polymeric material (10) thus giving an internal gas pressure resulting in a hollow channel (5), **characterised** in that the rim (2) produced by the moulding impressions (4) is a circumambient rim (2), which rim (2) has a substantially closed circumambient hollow internal channel (5), that the moulding impression (4) comprises at least one gate (7) for discharge of excess of the molten polymeric material (10) and at least one moving part (11) for controlled expansion of the moulding impression (4) to a pre-determined volume and at least one cavity (12) having a pre-determined volume and being coupled to and/or surrounding a gas duct (8), which cavity (12) constitutes a material reservoir for levelling of the pressure inside the channel (5), which pressure results from the gas injection, whereby the discharge of the excess of molten polymeric material (10) and/or the expansion of the moulding impression (4) is levelled and a to the cavity (12) corresponding abscess (13) is formed in the rim (2).

2. A method according to claim 1 **characterised** in that the volume of the cavity (12) can be adjusted by the gas pressure and/or by a regulating device.

3. A method according to claim 1 or 2 **characterised** in that the moving part (11) for controlled expansion of the moulding impression (4) is controlled by the gas pressure and/or by a regulating device (9).

4. A method according to any of the claims 1 - 3 **characterised** in that at least one cavity similar to a cavity (12) is coupled to and/or surrounding a gate (7) for discharge of excess of molten polymeric material (10).

5. A method according to claim 4 **characterised** in that a volume of a cavity coupled to and/or surrounding a gate (7) for discharge of excess of molten polymeric material (10) can be adjusted by the gas pressure and/or by a regulating device.

6. A method according to any of the claims 1 - 5 **characterised** in that any aperture in the circumambient rim (2) resulting from a gas duct (8) and/or a gate (6, 7) for injection or discharge of molten polymeric material is sealed.

7. A method according to claim 6 **characterised** in that a sealing is performed by applying a molten polymeric material (10).

8. A method according to claim 6 **characterised** in that a sealing is performed by means of a loosely attached, a glued or an ultrasonically welded plug, plate or the like (14).

## Patentansprüche

1. Verfahren zur Herstellung eines Spritzguss-Artikels (1), wie zum Beispiel eines Lager-, Transport- oder Abfallbehälters, einer Palette, eines Palettenbehälters oder ähnlichem, der/die aus einem Polymermaterial ausgeführt ist und eine hohle Krempe (2) aufweist, die ein integrierter Teil des Artikels (1) ist, wobei die Krempe (2) unter Verwendung eines Gaseinblasvorgangs unter Einbeziehung eines Formwerkzeugs (3) mit einer oder mehreren Formeindrückungen (4) erzeugt wird, von denen wenigstens eine Krempe (2) oder einen Teil einer Krempe (2) mit wenigstens einem hohlen Kanal (5) erzeugt, wobei die Formeindrückung (4) mit wenigstens einem Einlauf (6) zum Einspritzen eines geschmolzenen Polymermaterials (10) und wenigstens einer Gasleitung (8) für eine Gaseinspritzung in den Kern des geschmolzenen Polymermaterials (10) versehen ist, wodurch ein interner Gasdruck aufgebracht wird, der einen hohlen Kanal (5) erzeugt, dadurch
**gekennzeichnet**, dass die Krempe (2), die durch die Formeindrückungen (4) erzeugt wird, eine umlaufende Krempe (2) ist, welche Krempe (2) einen im wesentlichen geschlossenen umlaufenden, hohlen, inneren Kanal (5) aufweist, dass die Formeindrückung (4) wenigstens einen Einlauf (7) für das Ablassen eines Überschusses des geschmolzenen Polymermaterials (10) und wenigstens ein sich bewegendes Teil (11) für die gesteuerte Ausdehnung der Formeindrückung (4) auf ein vorbestimmtes Volumen und wenigstens einen Hohlraum (12) aufweist, der ein vorbestimmtes Volumen aufweist und mit einer Gasleitung (8) gekoppelt ist und/oder diese umgibt, welcher Hohlraum (12) einen Materialspeicher für die Nivellierung des Drucks innerhalb des Kanals (5) darstellt, welcher Druck aus der Gaseinspritzung entsteht, wodurch das Ablassen des Überschusses von geschmolzenem Polymermaterial (10) und/oder die Ausdehnung der Formeindrückung (4) nivelliert wird, und eine dem Hohlraum (12) entsprechende Beule (13) in der Krempe (2) ausgebildet wird.

2. Verfahren nach Anspruch 1, dadurch
**gekennzeichnet**, dass das Volumen des Hohlraums (12) durch den Gasdruck und/oder durch eine Reguliervorrichtung angepasst werden kann.

3. Verfahren nach einem der Ansprüche 1 oder 2, dadurch
**gekennzeichnet**, dass das sich bewegende Teil (11) für die gesteuerte Ausdehnung der Formeindrückung (4) durch den Gasdruck und/oder durch eine Reguliervorrichtung (9) gesteuert wird.

4. Verfahren nach einem der Ansprüche 1 bis 3, dadurch
**gekennzeichnet**, dass wenigstens ein Hohlraum ähnlich zu dem Hohlraum (12) mit einem Einlauf (7) zum Ablassen eines Überschusses von geschmolzenem Polymermaterial (10) gekoppelt ist und/oder diesen umgibt.

5. Verfahren nach Anspruch 4, dadurch
**gekennzeichnet**, dass ein Volumen eines Hohlraums, der mit einem Einlauf (7) zum Ablassen eines Überschusses von geschmolzenem Polymermaterial (10) gekoppelt ist und/oder diesen umgibt, durch den Gasdruck und/oder durch eine Reguliervorrichtung angepasst werden kann.

6. Verfahren nach einem der Ansprüche 1 bis 5, dadurch
**gekennzeichnet**, dass eine jegliche Aussparung in der umlaufenden Krempe (2), die aus einer Gasleitung (8) und/oder einem Einlauf (6, 7) zum Einspritzen oder Ablassen des geschmolzenen Polymermaterials entsteht, abgedichtet wird.

7. Verfahren nach Anspruch 6, dadurch
**gekennzeichnet**, dass eine Abdichtung durch Aufbringung eines geschmolzenen Polymermaterials (10) durchgeführt wird.

8. Verfahren nach Anspruch 6, dadurch
**gekennzeichnet**, dass eine Abdichtung mittels eines lose angebrachten, eines angeklebten oder eines durch Ultraschallschweißen angebrachten Stöpsels, einer Platte oder ähnlichem (14) durchgeführt wird.

## Revendications

1. Procédé de fabrication d'un article moulé par injection (1), tel qu'un conteneur de stockage, de transport ou pour déchets, une palette, un conteneur de palettes ou analogue fait d'un matériau polymère, et comportant un rebord creux (2) qui fait partie intégrante dudit article (1), grâce auquel le rebord (2) est produit en utilisant une procédure d'injection de gaz impliquant un outillage de moulage (3) comportant une ou plusieurs empreintes de moulage (4) dont au moins l'une produit un rebord (2) ou une partie d'un rebord (2) comportant au moins un canal creux (5), l'empreinte de moulage (4) étant munie d'au moins un canal de coulée (6) destiné à l'injection d'un matériau polymère fondu (10), d'au moins un conduit de gaz (8) destiné à l'injection de gaz dans l'âme du matériau polymère fondu (10) en appliquant ainsi une pression de gaz interne résultant en un canal creux (5), caractérisé en ce que le rebord (2) produit par les empreintes de moulage (4) est un rebord circonférentiel (2), lequel rebord (2) comporte un canal interne creux circonférentiel pratiquement fermé (5), en ce que l'empreinte de moulage (4) comprend au moins un canal (7) destiné à l'évacuation de l'excès du matériau polymère fondu (10) et au moins une partie mobile (11) destinée à une dilatation commandée de l'empreinte de moulage (4) jusqu'à un volume prédéterminé et au moins une cavité (12) présentant un volume prédéterminé et qui est reliée à un conduit de gaz (8) et/ou l'entoure, laquelle cavité (12) constitue un réservoir de matériau destiné à l'égalisation de la pression à l'intérieur du canal (5), laquelle pression résulte de l'injection de gaz, grâce à quoi l'évacuation de l'excès de matériau polymère fondu (10) et/ou la dilatation de l'empreinte de moulage (4) sont égalisées et une protubérance (13) correspondant à la cavité (12) est formée dans le rebord (2).

2. Procédé selon la revendication 1, caractérisé en ce que le volume de la cavité (12) peut être ajusté par la pression de gaz et/ou par un dispositif de régulation.

3. Procédé selon la revendication 1 ou 2, caractérisé en ce que la partie mobile (11) destinée à une dilatation commandée de l'empreinte de moulage (4) est commandée par la pression de gaz et/ou par un dispositif de régulation (9).

4. Procédé selon l'une quelconque des revendications 1 à 3, caractérisé en ce qu'au moins une cavité similaire à une cavité (12) est reliée à et/ou entoure un canal de coulée (7) destiné à l'évacuation de l'excès de matériau polymère fondu (10).

5. Procédé selon la revendication 4 caractérisé en ce que le volume d'une cavité reliée à et/ou entourant un canal de coulée (7) destiné à l'évacuation de l'excès de matériau polymère fondu (10) peut être ajusté par la pression de gaz et/ou par un dispositif de régulation.

6. Procédé selon l'une quelconque des revendications 1 à 5, caractérisé en ce que toute ouverture dans le rebord circonférentiel (2) résultant d'un conduit de gaz (8) et/ou d'un canal de coulée (6, 7) destiné à l'injection ou l'évacuation de matériau polymère fondu, est obturée.

7. Procédé selon la revendication 6, caractérisé en ce qu'une obturation est exécutée en appliquant un matériau polymère fondu (10).

8. Procédé selon la revendication 6, caractérisé en ce qu'une obturation est réalisée au moyen d'un bouchon, d'une plaque ou analogue (14), fixé de façon lâche, collé ou bien soudé par ultrasons.
